# Europäisches Patentamt

# European Patent Office

# Office européen des brevets

(19)

(11) Numéro de publication: **0 063 059**
**B1**

(12) ## FASCICULE DE BREVET EUROPEEN

(45) Date de publication du fascicule du brevet:
16.05.84

(51) Int. Cl.³: **A 23 C 11/02**, A 23 C 9/154

(21) Numéro de dépôt: **82400400.6**

(22) Date de dépôt: **08.03.82**

(54) Poudre de lait pour l'alimentation des animaux.

(30) Priorité: **17.03.81 FR 8105277**

(43) Date de publication de la demande:
**20.10.82 Bulletin 82/42**

(45) Mention de la délivrance du brevet:
**16.05.84 Bulletin 84/20**

(84) Etats contractants désignés:
**AT BE CH DE GB IT LI LU NL SE**

(56) Documents cités:
**CH - A - 486 209**
**FR - A - 1 466 221**
**FR - A - 1 477 633**
**US - A - 2 466 146**

**NETHERLANDS MILK & DAIRY JOURNAL, volume 29,
1975 TH. SNOEREN et al. "Effect of the molecular
weight of x-carrageenan on the retardation of fat
separation in evaporated milk", pages 29-40
H. GRAHAM "Food colloids" AVI PUBLI CO.1977
WESTPORT CONNECT. (US) pages 366-379**

(73) Titulaire: **SANDERS, 17 quai de l'Industrie,
F-91200 Athis-Mons (FR)**

(72) Inventeur: **Assoumani, Mohamed, 11 Les Avelines,
F-91440 Les Ulis (FR)**

(74) Mandataire: **Lepeudry-Gautherat, Thérèse et al,
CABINET ARMENGAUD JEUNE CASANOVA et
LEPEUDRY 23 boulevard de Strasbourg, F-75010 Paris
(FR)**

## Poudre de lait pour l'alimentation des animaux

La présente invention concerne une poudre de lait pour réaliser un lait reconstitué notamment pour jeunes animaux tels que des veaux, dont la durée de conservation est nettement plus longue que pour ceux actuellement commercialisés.

Comme les élevages bovins laitiers sont exclusivement tournés vers la production et la commercialisation du lait, et comme il est néanmoins nécessaire dans les élevages bovins à viande de compléter l'alimentation lactée du jeune, on utilise de plus en plus des laits reconstitués se présentant sous forme d'une poudre dans laquelle certains éléments nobles du lait ont été remplacés. Bien que cela puisse paraître paradoxal, l'utilisation de tels laits augmente la rentabilité économique des élevages.

A chaque repas, l'éleveur doit délayer une quantité de poudre de lait qui est déterminée en fonction des performances du jeune et de son âge, le plus souvent dans une eau relativement chaude, c'est-à-dire dont la température est aux alentours de 50°C; si le jeune ne consomme pas tout immédiatement, l'éleveur doit jeter le résidu car les qualités organoleptiques du lait et sa composition évoluent très facilement de façon à le rendre impropre à toute consommation. En effet, le lait est notamment un excellent milieu de culture.

Certes, il a déjà été imaginé des systèmes permettant à l'éleveur de ne pas préparer du lait à chaque repas. Par exemple, il existe un appareil préparant automatiquement le lait au fur et à mesure des besoins, les jeunes venant s'alimenter à volonté.

Aussi un but de la présente invention est-il de fournir une poudre de lait qui, une fois mise en solution dans l'eau, permet de réaliser un lait reconstitué dont les qualités organoleptiques et bactériologiques sont maintenues satisfaisantes pendant une assez longue durée, et qui peut donc être consommé même froid.

Ce but ainsi que d'autres qui apparaîtront par la suite, sont atteints par une poudre de lait selon la présente invention, qui comprend en plus des éléments nutritionnels un additif qui est mélange d'acide citrique et d'un carraghénane kappa ou iota ayant un poids moléculaire compris entre 150 000 et 300 000.

Avantageusement, une telle poudre de lait comprend de 0,2 à 4% en poids de cet additif, et de préférence de 0,3 à 0,6% en poids.

Cet additif est constitué d'environ 80 à 96% en poids d'acide citrique et d'environ 4 à 20% en poids d'un carraghénane kappa ou iota.

Selon un mode de réalisation préféré de l'invention, l'additif comprend entre 88 et 92% en poids d'acide citrique et entre 12 et 8% en poids d'un carraghénane kappa ou iota ayant un poids moléculaire compris entre 150 000 et 300 000.

La poudre de lait selon la présente invention peut être mise en solution dans de l'eau froide. Cette dissolution peut également être réalisée dans de l'eau chaude, c'est-à-dire dont la température est de l'ordre de 45–50°C.

Le lait reconstitué à partir de cette poudre peut être laissé à la disposition des animaux pendant au moins 72 heures, soit trois jours, sans qu'aucun trouble physiologique n'apparaisse chez le jeune: ceci est la traduction d'une bonne conservation de ce lait à la température ambiante et à l'air libre.

L'exemple ci-dessous n'a aucun caractère limitatif et permet à l'homme du métier de mieux comprendre les avantages d'une poudre de lait selon la présente invention.

### Exemple

On dilue dans l'eau à 45°C environ une poudre de lait commercialisée sous la marque CREMO à laquelle a été ajouté 0,44% en poids d'un additif selon la présente invention par rapport au poids de lait reconstitué. Cet additif comprend 90% d'acide citrique et 10% en poids d'un carraghénane kappa ayant un poids moléculaire compris entre 150 000 et 300 000.

La concentration en lait du lait reconstitué ainsi obtenu est de 100 g/litre.

Il n'a pas été observé ni de remontée de corps gras ni de formation de caillé durant une période d'au moins 72 heures après la préparation de ce lait reconstitué.

Par ailleurs, les jeunes veaux de boucherie auxquels ce lait a été distribué et laissé à disposition, en ont consommé de 13 à 15 litres par jour en moyenne. Ce résultat montre qu'un lait reconstitué à partir d'une poudre de lait comprenant un additif selon la présente invention, présente une appétence satisfaisante bien qu'il soit consommé froid. De plus, ceci entraîne une meilleure efficacité alimentaire au niveau de la croissance des animaux.

### Revendications

1. Poudre de lait notamment pour l'alimentation animale, caractérisée par le fait qu'elle comprend en plus des éléments nutritionnels, de 0,2 à 1% en poids d'un additif constitué par un mélange d'acide citrique et d'un carraghénane kappa ou iota, ayant un poids moléculaire compris entre 150 000 et 300 000.

2. Poudre de lait selon la revendication 1, caractérisée en ce qu'elle comprend de 0,3 à 0,6% en poids dudit additif.

3. Poudre de lait selon l'une quelconque des revendications 1 et 2, caractérisée en ce que ledit additif est constitué d'environ 80 à 96% en poids d'un carraghénane kappa ou iota.

4. Poudre de lait selon la revendication 3, caractérisée en ce que ledit additif comprend de 88 à 92% en poids d'acide citrique et de 12 à 8% en poids d'un carraghénane kappe ou iota.

**Patentansprüche**

1. Milchpulver, insbesondere für Tierfutter, dadurch gekennzeichnet, daß es zusätzlich zu den Nahrungselementen 0,2 bis 1 Gew. -% eines Zusatzstoffes enthält, der aus einer Mischung aus Zitronensäure und einem Kappa- oder Iota-Carrageenan mit einem zwischen 150 000 und 300 000 liegenden Molekulargewicht besteht.

2. Milchpulver nach Anspruch 1, dadurch gekennzeichnet, daß es 0,3 bis 0,6 Gew.-% des genannten Zusatzstoffes enthält.

3. Milchpulver nach einem der Ansprüche 1 und 2, dadurch gekennzeichnet, daß der genannte Zusatzstoff aus etwa 80—96 Gew.-% Zitronensäure und etwa 4—20 Gew.-% eines Kappa- oder Iota-Carrageenans besteht.

4. Milchpulver nach Anspruch 3, dadurch gekennzeichnet, daß der genannte Zusatzstoff 88—92 Gew.-% Zitronensäure und 12—8 Gew.-% eines Kappa- oder Iota-Carrageenans enthält.

**Claims**

1. Milk powder, especially for feeding animals, characterized by the fact that it contains, in addition to nutitional elements, from 0,2 to 1% by weight of an additive which comprises a mixture of citric acid and a kappa or iota carrageenan having a molecular weight in the range of from 150 000 to 300 000.

2. Milk powder according to claim 1, characterized in that it contains from 0,3 to 0,6% by weight of the said additive.

3. Milk powder according to any of claims 1 and 2, characterized in that the said additive consists of approximately from 80 to 96% by weight of citric acid and approximately from 4 to 20% by weight of a kappa or iota carrageenan.

4. Milk powder according to claim 3, characterized in that said additive consists of from 88 to 92% by weight of citric acid and from 12 to 8% by weight of a kappa or iota carrageenan.